# EUROPEAN PATENT APPLICATION

(11) **EP 1 074 824 A1**
(43) Date of publication of application: **07.02.2001**
(21) Application number: 00305255.2
(22) Date of filing: 21.06.2000
(51) Int. Cl.: G01J 5/00, G01J 5/06

(54) **Monitoring the temperature of a packaged item**

(30) Priority: 03.08.1999 GB 9918311
(71) Applicant: Land Instruments International Limited, Dronfield, Sheffield S18 8DJ (GB)
(72) Inventor: Ridley, Ian Hamilton, Sheffield S8 8QU (GB)
(74) Representative: Skone James, Robert Edmund

(57) **Abstract**

A method of monitoring the temperature of a packaged item (9), the method comprising detecting radiation emitted from a lower region of the package (9); and applying a predetermined algorithm to the detected radiation to provide an indication of the temperature corresponding to the detected radiation.

## Description

The invention relates to a method of monitoring the temperature of a packaged item and a radiation thermometer assembly for use in such a method.

It is important to be able to determine the temperature of certain packaged items, particularly foodstuffs, to ensure that they are being stored at the correct temperature. This is particularly difficult with items which are to be maintained at a relatively low temperature, for example less than 10°C.

Up to now, it has been very difficult to obtain an accurate measure of the temperature of the chilled food. Any attempt to determine the temperature directly will require access to be obtained which will cause damage to the packaging and thus destroy the insulation of the product. In such a case, a sample product could be obtained and its temperature monitored and then an assumption made that other similar products under the same conditions have the same temperature. The sample would then have to be discarded.

In accordance with a first aspect of the present invention, a method of monitoring the temperature of a packaged item comprises detecting radiation emitted from a lower region of the package; and applying a predetermined algorithm to the detected radiation to provide an indication of the temperature corresponding to the detected radiation.

In accordance with a second aspect of the present invention, a radiation thermometer assembly comprises a packaged item support, the support having an aperture; and a radiation thermometer positioned to detect radiation which has passed through the aperture from a lower region of the package, the radiation thermometer being adapted to apply a predetermined algorithm to the detected radiation to provide an indication of the temperature corresponding to the detected radiation.

We have realised that it is possible to obtain a reasonable indication of the temperature of a packaged item by detecting radiation emitted from a lower region of the package. This is on the basis that the item is likely to be in contact with the lower region of the package so the heat will be conducted through the lower region of the package and then radiated, the radiated heat then being detected. If necessary, some compensation can be applied to the monitored temperature to take account of heat loss as a result of conduction through the packaging material.

Preferably, radiation emitted from the base of the package is detected although it could also be detected from areas adjacent the base in certain cases.

One problem that can arise when monitoring relatively low temperatures using a radiation technique is the effect of background radiation. Preferably, therefore, the method further comprises substantially excluding background radiation from the detected radiation. This could be achieved by providing the support as a substantially closed container in which the radiation thermometer is at least partly located.

Another problem which can arise with radiation thermometry is due to the emissivity of the radiating surface. Usually, this must be corrected for during downstream processing. This can also be compensated by a technique known as emissivity enhancement by causing multiple reflections.

The wavelength of the detected radiation may be the same as is used in conventional radiation detectors and is preferably relatively short, typically up to 12 microns and most preferably 4 microns.

An example of a radiation thermometer assembly and method according to the invention will now be described with reference to the accompanying drawings, in which:-
Figure 1 is a perspective view of the assembly with the thermometer omitted; and,
Figure 2 is a partial cross-section through the assembly of Figure 1 but also showing the thermometer and a target object.

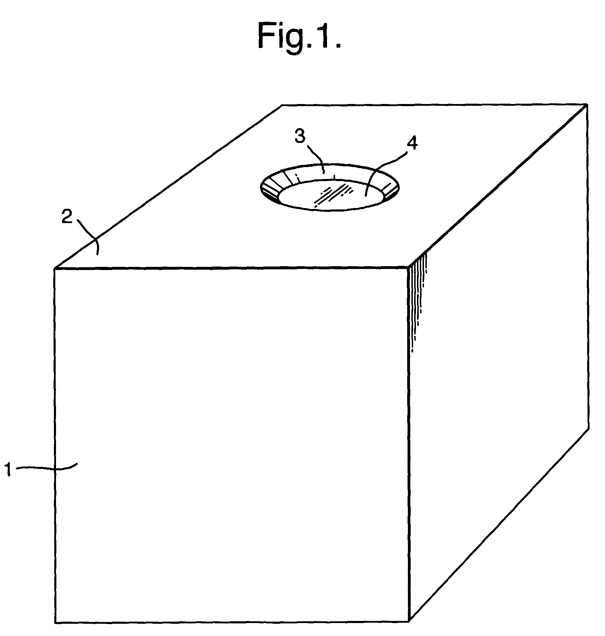

The assembly shown in Figure 1 comprises a box 1 having an upper support surface 2 in which is provided an aperture 3. A sapphire window 4 is located in the aperture 3 offset from the support surface 2.

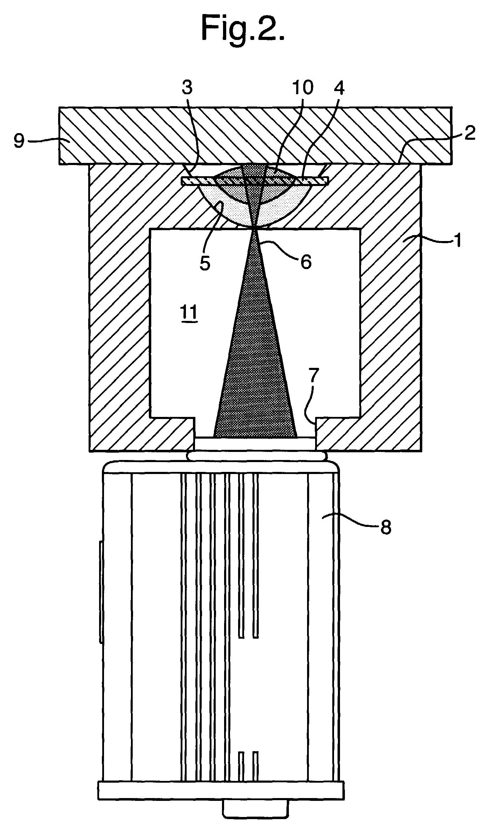

The construction of the box 1 and the rest of the assembly can be seen in more detail in Figure 2. It will be seen in this Figure that the aperture 3 has a generally concave form so as to define an emissivity enhancing reflector 5 having a central aperture 6. Aligned with the aperture 6 is a lower aperture 7 into which part of a standard radiation thermometer 8 is located. The base of a packaged item whose temperature is to be monitored is shown schematically at 9 and is placed on the upper support surface 2. In practice, this placement could be done manually or automatically, for example using a robot arm or the like, while in a further arrangement, packaged items could be conveyed sequentially over the aperture 3.

Radiation emitted by the item is conducted through the base 9 of the packaging and is then radiated into the aperture 3 as shown at 10. The sapphire window 4 protects the reflective part 5 of the aperture 3 so as to keep it clean but is spaced from the surface 2 so as to prevent heat conduction through the window.

Initial radiation falling on the concave surface 5 is reflected one or more times onto the base 9 so as to minimise the effects of emissivity variations and then exits from the aperture 3 through the aperture 6.

The radiation then passes through the box 1 and impinges on the thermometer 8 where it is detected and processed in a conventional manner using Planks' law to generate an equivalent temperature value.

It will be noted that the base 9 of the package prevents any background radiation entering the aperture 3 while the box 1 defines a completely closed volume 11 to prevent significant background radiation reaching the thermometer 8.

The thermometer 8 can produce an output in any conventional form indicating the temperature.

We have found that over a time of several seconds, a resolution of less than 0.1°C can be obtained with the Land M6 thermometer.

## Claims

1. A method of monitoring the temperature of a packaged item, the method comprising detecting radiation emitted from a lower region of the package; and applying a predetermined algorithm to the detected radiation to provide an indication of the temperature corresponding to the detected radiation.

2. A method according to claim 1, wherein radiation emitted from the base of the package is detected.

3. A method according to claim 1 or claim 2, further comprising substantially excluding background radiation from the detected radiation.

4. A method according to any of the preceding claims, further comprising carrying out an emissivity enhancement on the emitted radiation before detecting it.

5. A method according to any of the preceding claims, wherein the item has a temperature less than 10°C.

6. A method according to any of the preceding claims, wherein the radiation has a wavelength of substantially 4 microns.

7. A radiation thermometer assembly comprising a packaged item support, the support having a first aperture; and a radiation thermometer positioned to detect radiation which has passed through the first aperture from a lower region of the package, the radiation thermometer being adapted to apply a predetermined algorithm to the detected radiation to provide an indication of the temperature corresponding to the detected radiation.

8. An assembly according to claim 7, further comprising a window member mounted in the first aperture to allow the emitted radiation to pass therethrough, the window being spaced inwardly from an upper surface of the support.

9. An assembly according to claim 8, wherein the window is made of sapphire.

10. An assembly according to any of claims 7 to 9, further comprising a reflector onto which the emitted radiation impinges in use, the reflector reflecting the emitted radiation towards the packaged item.

11. An assembly according to claim 10, wherein the reflector is formed by a concave, outwardly facing part of the wall of the first aperture and has a central bore through which the enhanced radiation passes to the radiation thermometer.

12. An assembly according to any of claims 7 to 11, wherein the support comprises a substantially closed container in which the radiation thermometer is at least partly located, the support substantially preventing background radiation from being detected.

13. An assembly according to claim 12, when dependent on claim 8 or claim 9, wherein the support includes an auxiliary aperture into which a receiving part of the radiation thermometer can be mounted, the auxiliary aperture being aligned with the first aperture.

14. An assembly according to any of claims 7 to 13, wherein the radiation thermometer is adapted to detect radiation with a wavelength of substantially 4 microns.
